(19) **Europäisches Patentamt**
**European Patent Office**
**Office européen des brevets**

(11) **EP 2 340 353 B1**

(12) **EUROPÄISCHE PATENTSCHRIFT**

(45) Veröffentlichungstag und Bekanntmachung des Hinweises auf die Patenterteilung:
**05.09.2012 Patentblatt 2012/36**

(51) Int Cl.:
**E21B 43/01** *(2006.01)*    **E21B 43/36** *(2006.01)*

(21) Anmeldenummer: **09764474.4**

(86) Internationale Anmeldenummer:
**PCT/EP2009/064259**

(22) Anmeldetag: **29.10.2009**

(87) Internationale Veröffentlichungsnummer:
**WO 2010/049474 (06.05.2010 Gazette 2010/18)**

(54) **VORRICHTUNG UND VERFAHREN ZUR SANIERUNG UND SEPARATION VON GASAKKUMULATIONEN IN GEWÄSSERN**

DEVICE AND METHOD FOR REMEDIATING AND SEPARATING GAS ACCUMULATIONS IN WATERWAYS

DISPOSITIF ET PROCÉDÉ POUR L'ASSAINISSEMENT ET LA SÉPARATION D'ACCUMULATIONS GAZEUSES DANS DES EAUX

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **30.10.2008 DE 102008043329**

(43) Veröffentlichungstag der Anmeldung:
**06.07.2011 Patentblatt 2011/27**

(73) Patentinhaber: **Helmholtz-Zentrum für Umweltforschung GmbH-UFZ**
**04318 Leipzig (DE)**

(72) Erfinder:
• **LAZIK, Detlef**
**06198 Salzatal / Schiepzig (DE)**

• **LAZIK, Dieter**
**14778 Beetzsee / OT Radewege (DE)**
• **REMMLER, Matthias**
**04808 Wurzen (DE)**

(74) Vertreter: **Gulde Hengelhaupt Ziebig & Schneider Patentanwälte - Rechtsanwälte**
**Wallstrasse 58/59**
**10179 Berlin (DE)**

(56) Entgegenhaltungen:
**WO-A1-2005/088071    DE-A1- 19 906 147**
**JP-A- 5 004 039    US-A1- 2003 214 175**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die Erfindung betrifft Vorrichtungen und Verfahren zur Abreicherung von gelösten Gasen sowie zur Separation der Gasphase aus Gas-Wasserphasengemischen aus Gewässern sowie Verwendungen dieser Vorrichtungen und Verfahren.

Stand der Technik

Die letzten 200 Jahre industriell geprägter globaler Entwicklung haben zu einem drastischen Abbau der über erdgeschichtliche Zeiten entstandenen fossilen Energieträger geführt. Ein Großteil der weltweiten Lagerstätten an Erdöl, Gas und Kohle werden in absehbarer Zeit erschöpft sein. Ungeachtet dessen weist der Energiebedarf der Menschheit bis jetzt einen ungebrochen stark progressiven Trend auf (Hawksworth, J.: The World in 2050. Can rapid global growth be reconciled with moving to a low carbon economy?, PricewaterhouseCoopers LLP - July 2008. 1-21.).

Der Abbau von an den Kontinentalrändern, d.h. in großer Tiefe, gefundenen Methanhydratlagerstätten wird, aufgrund unterschiedlicher Aspekte, wie beispielsweise die enormen Anforderungen an die Technologie, oder das hohe abbaubedingte Risiko spontaner Entgasungserscheinungen mit globaler klimatischer Relevanz (Zhang, Y., Kling, G.W.: Dynamics of Lake Eruptions and Possible Ocean Eruptions. Annu. Rev. Earth Planet. Sci. 2006.34: 293-324.), derzeit noch nicht praktiziert.

Neben bislang nicht vorhandenen Technologien, die unter ökonomischen Gesichtspunkten die Nutzung von in Gewässern lagernden Gasrohstoffen gestatten, können derartige "Lagerstätten" auch Gefahren darstellen.

Die klimatische Entwicklung der Erde belegt unabhängig von der Diskussion der Ursachen eine globale Erwärmung. Jüngste geologische Funde belegen eine neue Theorie, die widerspruchsfrei das kurzfristige globale Aussterben der Arten auf der Erde erklärt. Im Gegensatz zu Meteoriteneinschlägen, Vulkanausbrüchen, etc. legt diese Theorie dem Aussterben die These der massiven $H_2S$-Entgasung der Weltmeere zugrunde (Berner, R. A.: Plants, H2S, CO2, O2 and the Permo-Triassic Extinction. 2006 Philadelphia Annual Meeting (22-25 October 2006) Philadelphia, Pennsylvania, Paper No. 137-9). Die Mechanismen der Phasenseparation hierzu sind bekannt. Der Schlüsselmechanismus ist generell an die globale Erwärmung gekoppelt. Dabei können die Auslöser solcher eruptiven Phasenseparationen unterschiedlicher Natur sein, wie etwa Vulkanausbrüche, phasenseparationsbedingte (Methan-) Gasausbrüche, anthropogener Treibhauseffekt, etc. In kleineren Gewässern wird der dargestellte Mechanismus bereits beobachtet (Beispiel in bereits erheblicher Dimension: jüngstes Fischsterben in der Ostsee). Phasenseparationsgetriebene Seeeruptionen sind von unterschiedlichen Seen Afrikas bekannt und haben verheerende Katastrophen verursacht (Zhang, Y., Kling, G.W.: Dynamics of Lake Eruptions and Possible Ocean Eruptions. Annu. Rev. Earth Planet. Sci. 2006.34: 293-324.).

Eine kontrollierte Reduktion der Konzentrationen klimarelevanter Gase in tiefen Gewässern würde die Gefahr ozeanischer Gasausbrüche und den Eintrag von klimarelevanten Gasen in die Atmosphäre reduzieren. Gleichzeitig würde sich die verfügbare Gasspeicherkapazität der Meere tendenziell erhöhen.

Ein effizient arbeitendes Verfahren könnte eine derartige Reduktion je nach vorhandener Gasmenge und deren Zusammensetzung als eine kostengünstige Sanierung oder auch in Form einer gewinnbringenden Exploration der Gaslagerstätte "Ozean" ermöglichen.

Ein Problem bei dem Abbau von Gasen aus Gewässern ist, dass getrieben von den Druck- und Phasendichteunterschieden eine ablaufende Gasphasenseparation und der Aufstieg des Gas-Wasserphasengemisches hochgradig nichtlineare Prozesse sind, die selbstverstärkend (im freien Gewässer auch explosionsartig) ablaufen können und damit hohe Anforderungen an Material und Fördertechnologie stellen sowie hohe Unfallrisiken in sich bergen. Zhang & Kling beschreiben die freie auftriebsgebundene Bewegung einer sich formierenden Gasphase in Gewässern und deren Bewegung in einem Rohr als positiv rückgekoppelten Prozess. Die beginnende Entgasung bedingt die Herabsetzung der Gemischdichte und bedingt dadurch Auftrieb. Durch den Aufstieg des Gas-Wassergemisches werden Regionen mit geringerem Umgebungsdruck erreicht, was dazu führt, dass der Druck im Gas-Wassergemisch weiter abnimmt und damit zur Freisetzung weiteren Gases führt. Dabei kann ein Methangas-Wassergemisch trotz der geringen Wasserlöslichkeit von Methan zu einem explosionsartigen Aufstieg führen. Höhere Löslichkeiten z.B. für $CO_2$ oder $H_2S$ führen zu einer weit stärkeren Rückkopplung. Zhang & Kling schätzen die Geschwindigkeit, mit der das Zentrum einer Methanbläschenwolke ($1\%_{Masse}$ $CH_4$) aus 500 m Tiefe die Wasseroberfläche erreicht mit 130 m/s ab. Für 0.1 $\%_{Masse}$ erreicht das Geschwindigkeitsmaximum immer noch 62 m/s. Dabei entspricht $0.1\%_{Masse}$ $CH_4$ unter Standardbedingungen etwa 22.4 Umol * 1 g ($CH_4$) /16 g/mol = 1.4 L. Ein solches Gas-Wasser-Phasengemisch besteht an der Gewässeroberfläche volumetrisch etwa zur Hälfte aus Gasphase (Phasenanteil 0.58). Die mechanische Energiedichte $1/2\ \rho v^2 = pgh$ führt auf eine Gemischdruckhöhe der Größenordnung $h=v^2/(2g) \approx 10^2 m$ und damit zu einer explosionsartigen Entladung an der Wasseroberfläche.

In WO 2005/088071 A1 ist eine Vorrichtung offenbart zur Gewinnung von Helium und Methan, welches als freies Gas am Gewässerboden aus einer Gasquelle austritt oder aus dem Gewässerboden gewonnen wird. Die Vorrichtung umfasst eine über der Gasquelle am oder im Gewässerboden verankerte Aufnahmevorrichtung für die mit der wässrigen Phase vermischten Gasphase und ein Rohrsystem, welches ein Explorationsrohr zum Transport des Gas-Wasser-Phasengemisches zu einer Gasfalle sowie ein Injektionsrohr zur Rückführung der gasabgereicherten wässrigen Phase aus der Gasfalle aufweist. In der Gasfalle kann ein ausgewählter Druck erzeugt werden durch den das Phasengemisch durch das Explorationsrohr über die mit einer Gasaufnahmevorrichtung verbindbare Gasfalle in das Injektionsrohr überführbar ist.

Der vorliegenden Erfindung liegt die Aufgabe zugrunde, eines oder mehrere der geschilderten Probleme zu vermindern oder zu lösen.

## Erfindungsgemäße Lösung

Zur Verkürzung der Schreibweise wird im Folgenden das Wasser, dass die gelösten Gase und ggf. Gasphase aufnimmt als Fluid bezeichnet.

Die Aufgabe wird gelöst durch Bereitstellung einer Vorrichtung zur Abreicherung von Gasen aus Gewässern, umfassend:

ein Rohrsystem, welches

i) ein Explorationsrohr zur Aufnahme des gasenthaltenden Fluids,
ii) ein Injektionsrohr zur Rückführung des gasabgereicherten Fluids und
iii) mindestens eine Gasfalle aufweist, die derart in der Vorrichtung angeordnet ist, dass in der Gasfalle ein ausgewählter Druck erzeugbar ist,

wobei die Gasfalle sowohl mit dem Explorationsrohr als auch mit dem Injektionsrohr derart funktional verbunden ist, dass das Fluid aus dem Explorationsrohr über die Gasfalle in das Injektionsrohr überleitbar ist und die Gasfalle funktional mit einer Gasaufnahmevorrichtung verbindbar ausgestaltet ist;
dadurch gekennzeichnet, dass
das Rohrsystem eine Mehrzahl von Gasfallen aufweist, wobei

I) die Gasfallen sowohl mit dem Explorationsrohr als auch mit dem Injektionsrohr derart funktional verbunden sind, dass das Fluid aus dem Explorationsrohr über die Gasfallen in das Injektionsrohr überleitbar ist,
II) die Gasfallen in bestimmten Abständen vertikal übereinander und relativ zur abzureichernden fluidischen Lagerstätte angeordnet und derart funktional miteinander verbunden sind, dass das aufsteigende Fluid aus dem Explorationsrohr in eine erste Gasfalle gelangt die sich auf einem ersten Druckniveau befindet, bei dem ein erstes Gas oder Gasgemisch abgeschieden wird, anschließend das abgereicherte Fluid in eine zweite Gasfalle auf einem wiederum vorgegebenen Druckniveau gelangt, in dem ein zweites Gas/Gasgemisch abgeschieden wird, wobei der erste Druck und der zweite Druck sich voneinander unterscheiden und
III) die einzelnen Gasfallen jeweils funktional mit einer oder mehreren Gasaufnahmevorrichtungen verbindbar sind oder die Gasfallen in einer oder mehreren Gruppen mit einer gemeinsamen Gasaufnahmevorrichtung verbindbar sind.

Während des Betriebs der Vorrichtung ist das Explorationsrohr mit einer Öffnung für den Einritt des Fluides in die fluidische Lagerstätte des Gewässers abgesenkt und nimmt das Fluid bevorzugt kontinuierlich in die Vorrichtung auf. Das Fluid wird über das Explorationsrohr in eine relativ zur Lagerstätte höher gelegene Gasfalle transportiert. Wegen der Druckabhängigkeit der Gaslöslichkeit kommt es dabei zur Gasphasenseparation aus dem Fluid. Die dabei freiwerdende gasförmige Phase wird in der Gasfalle z.B. gravitiv abgeschieden. Die Fließbedingungen des Fluids in der Gasfalle werden hinsichtlich der Gasphasenseparation optimiert. Dazu kann die Oberfläche des in die Gasfalle eintretenden Fluides durch geeignete Vorrichtungen (z.B. durch verdüsen oder durch Leitung über einen porösen Körper oder Gitter) maximiert werden. Ein Sumpf durch den das austretende Fluid geführt wird, gestattet die Ausgestaltung einer beruhigten Wasserzone aus der eine ggf. mitgerissene Restgasphase ausgasen kann. Das abgereicherte Wasser wird dann über das Injektionsrohr in eine vorher festgelegte Teufe abgegeben und verpresst.

Die erfindungsgemäße Vorrichtung kann zusätzlich eine regelbare Anlage aufweisen, die derart funktional mit dem Rohrsystem verbunden ist, dass ein ausgewählter Staudruck im Rohrsystem und damit eine kontrollierbare Strömung vom Explorationsrohr, durch die Gasfalle, hin zum Injektionsrohr erzeugbar ist. Die regelbare Anlage kann derart ausgestaltet sein, dass durch Regelung der Anlage im Rohrsystem ein ausgewählter Staudruck einstellbar ist. Die regelbare Anlage kann eine passive Anlage sein, die durch Veränderung des Querschnitts an mindestens einer Stelle des Rohrsystems eine Regelung des Staudrucks gestattet. Eine bevorzugte passive regelbare Anlage ist ein Muffe, die derart funktional mit der Vorrichtung verbunden ist, dass der Durchmesser an mindestens einer Stelle im Rohrsystem kontrolliert verjüngbar ist, bevorzugt im Explorationsrohr. Die regelbare Anlage kann auch eine aktive Anlage sein. Eine bevorzugte aktive regelbare Anlage ist eine Turbine. Die erfindungsgemäße Vorrichtung kann mehrere regelbare Anlagen umfassen, wobei in einer Vorrichtung unterschiedliche regelbare Anlagen vorhanden sein können.

Die regelbare Anlage stellt einen gewünschten Staudruck im Rohrsystem bereit. Dies kann im passiven System z.B. durch geeignete Verkleinerung des Querschnitts im Rohrsystem erreicht werden. Bevorzugt ist die regelbare Anlage eine Turbine. Gegebenfalls dient die Turbine während der Anfahrphase dazu, den Fluidstrom in Bewegung zu setzen. Ist der Fluidstrom in Gang gekommen, läuft dieser, wegen der auftriebsgetrieben stattfindenden Phasenseparation, bevorzugt freiwillig, unter Entwicklung nutzbarer Strömungsenergie weiter. In diesem Stadium kann die Turbine beispielsweise der Steuerung des Fluidvolumenstromes, der Optimierung der Separation der Gase innerhalb der Gasfalle und der Begrenzung der mechanischen Belastung der Vorrichtung durch die auftriebsgebundene Fluidbewegung dienen. Dabei regelt die Turbine einen Staudruck im Rohrsystem. Dies kann dadurch erreicht werden, dass die Turbine einen Teil der mechanischen Energie aufnimmt und zur Umsetzung in elektrische Energie nutzbar macht. Die regelbare Turbinenleistung und die einstellbare Höhenlage der Gasfalle relativ über der fluidischen Lagerstätte erlaubt die Einstellung optimaler Bedingungen für den Druck und die Fluidverweilzeit in der Gasfalle. Diese Bedingungen können so gewählt und eingestellt werden, dass nur bestimmte Gase oder Gasgemische aus dem Fluid separiert werden und/oder nur eine bestimmte Menge an einem bestimmten Gas, ausgewählten Gasgemisch oder allen gelösten Gasen abgeschieden werden und/oder eine nahezu vollständige Entgasung stattfindet. Die Gasfalle kann mit einer Gasaufnahmevorrichtung verbunden sein, die es erlaubt die abgeschiedenen Gase aufzunehmen, weiter aufzureinigen und/oder weiteren Verwendungen zuzuführen. Die erfindungsgemäße Vorrichtung kann mit einer Explorations- oder Verarbeitungsplattform verbunden sein, welche sich auf der Wasseroberfläche oder an Land befindet. Eine solche Plattform kann beweglich sein, wie z.B. ein Schiff oder lokal verankert, wie z.B. eine Bohrinsel-ähnliche Anlage oder fest mit dem Erdboden oder dem Gewässerboden verankert sein. Die Plattform kann weitere Vorrichtungen aufweisen, wie beispielsweise eine Gasaufnahmevorrichtung, eine Vorrichtung zur Umwandlung von mechanischer Energie in elektrische oder chemische Energie und/oder weitere Vorrichtungen zur Weiterverarbeitung und Auftrennung der vorabgereicherten Gase.

Das Explorationsrohr zur Aufnahme des Fluids und das Injektionsrohr zur Rückführung des abgereicherten Wassers können als teleskopartige Röhren ausgestaltet sein, die auf festlegbare Teufen abgesenkt werden können. Die Röhren können ggf. ganz oder teilweise ineinander geschachtelt werden, so dass das Explorationsrohr innerhalb des Injektionsrohres (oder umgekehrt) geführt wird. Die Rohre können alternativ dreh- und/oder schwenkbar zueinander angeordnet sein und in ihren Geometrien auf die spezifische Lagerstättensituation abgestimmt werden. In einer bevorzugten Ausführungsform ist mindestens ein Teil des Rohrsystems mit einem hydrophoben Material beschichtet, bevorzugt mit Teflon.

Die Innenseite der / des Explorationsrohre(s), Gitter die ggf. im Bereich der Eintrittsöffnung(en) installiert werden, aber auch die Turbinenräder, können mit einem hydrophoben Material (ggf.), beispielsweise mit einem Teflon-haltigen Material beschichtet sein. Gleichfalls können separationsrelevante Bestandteile der Gasfalle hydrophob beschichtet sein. Das hydrophobe Material kann dabei strukturiert aufgebracht sein, beispielsweise in Form von wasserseitig mikroporösen oder behaarten Oberflächen. Bei Verwendung solcher Oberflächen kann es unter ausgewählten Bedingungen, z.B. wenn die Konzentration mindestens eines gasphasenbildenden Gelöstgases nahe der Sättigungskonzentration ist und der hydrostatischer Druck die Phasenseparation mindestens dieses Gases ermöglicht, zur bevorzugten Gasseparation an der hydrophoben Oberfläche kommen oder aber die Separationsgeschwindigkeit nach Initiierung kann erhöht werden.

Daneben kann der strömungsbedingte Druckabfall über einen porösen Körper im Rohrsystem auch oder zusätzlich die Entgasung beschleunigen. Der poröse Körper kann dabei gleichzeitig eine Filterfunktion erfüllen. Beispiele für einen solchen porösen Körper sind eine poröse Platte, Schüttgut und/oder hydrophobe Schwebekörper, die durch die Fluidströmung getragen werden. Alternativ oder in Kombination dazu können Membranen im gleichen Kontext (z.B. hydrophobe Filter-oder Polymermodule) zur Phasenseparation eingesetzt werden, wobei durch den Einsatz von gasselektiven Membranen die gasspezifische Trennleistung der Vorrichtung weiter gesteigert werden kann. Entsprechende Membranen sind dem Fachmann bekannt. Bevorzugt weist der poröse Körper mindestens eine hydrophobe Oberfläche auf. Bevorzugt befindet sich der poröse Körper in einem gasabhängig festlegbaren Bereich vor der Gasfalle. Er kann sich aber auch an jeder beliebigen Position im Rohrsystem befinden, die vom Fluid durchströmt wird und die nicht hinter der letzten Gasfalle liegt oder er kann das Explorationsrohr vollständig bis zur Gasfalle ausfüllen.

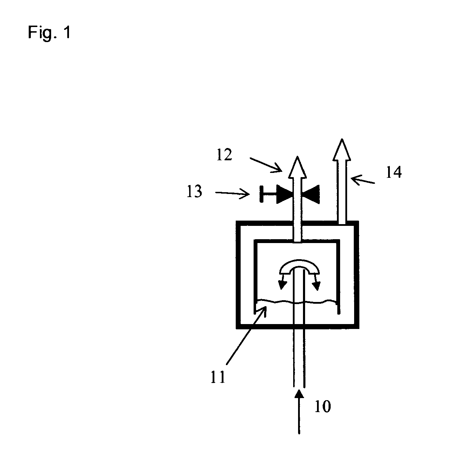

Die Vorrichtung weist mindestens eine Gasfalle auf, die sowohl mit dem Explorationsrohr als auch mit dem Injektionsrohr derart funktional verbunden ist, dass Wasser aus dem Explorationsrohr über die Gasfalle in das Injektionsrohr überleitbar ist. Für die Zwecke der Erfindung wird unter dem Begriff "Gasfalle" jede Vorrichtung verstanden, die zur Abscheidung einer Gasphase geeignet ist, welche durch Phasenseparation aus einem Gas-Fluidgemisch entstanden ist und nun von der flüssigen Phase getrennt werden soll. Die Gasfalle ist dabei so in der Vorrichtung angeordnet, dass in der Gasfalle ein ausgewählter Druck erzeugbar ist. Erfindungsgemäß können verschiedene bekannte Verfahren, sowie Kombinationen daraus zur Gasphasenabscheidung eingesetzt werden. Beispielhaft ist in Fig. 1 eine gravitative Gasfalle skizziert. Dabei geben die Pfeile mit den geschlossenen Köpfen die Bewegungsrichtung des sich aufwärts bewegenden Phasengemisches 10 an. Oberhalb der Gas-Wasser-Grenzfläche 11 tritt das Phasengemisch 10 in den Abscheideraum der Gasfalle ein. An der Decke des Abscheideraums befindet sich eine Rohrleitung 12 zum Abführen des separierten Gases oder Gasgemisches. Der Abtransport des abgeschiedenen Gases aus der Abscheidekammer der Gasfalle durch die Rohrleitung 12 kann z.B. über ein Gasabscheiderventil 13 regel- und/oder steuerbar ausgestaltet sein. Das abgereicherte Fluid gelangt aus der Gasfalle in die Phasengemischleitung 14 und kann ggf. einer weiteren Gasfalle zugeführt werden, in der andere Druckverhältnisse herrschen und andere Gase oder Gasgemische abgeschieden und separiert werden.

Alternativ oder in Kombination dazu können Membranen (z.B. hydrophobe Filter-oder Polymermodule) zur Gasphasenabscheidung eingesetzt werden, wobei durch den Einsatz von gasselektiven Membranen die gasspezifische Trennleistung weiter gesteigert werden kann. Entsprechende Membranen sind dem Fachmann bekannt. Die Gasfalle kann über die verbauten Materialien, den definierbaren Strömungsweg des Fluids und/oder die Erzeugung lokaler Druckgradienten (durch Ausnutzung hydrodynamischer Effekte an Blenden, Prallplatten, etc.) hinsichtlich einer maximalen Gasabscheidung optimiert werden. Die Gasfalle kann mit einer Gasaufnahmevorrichtung verbunden werden.

Der optimale Druckabfall bis hin zur Gasfalle kann durch Festlegung der Höhenlage der Gasfalle über der abzureichernden fluidischen Lagerstätte erzeugt werden. Zusätzlich kann der Druckabfall bis zur Gasfalle durch einen Staudruck im Rohrsystem vermittelt durch eine regelbare Anlage, z.B. eine Turbine, variiert und geregelt werden.

Der Druck in der Gasfalle $p_g$ kann vereinfacht etwa durch folgende Beziehung anschaulich verdeutlicht werden:

$$p_g = p_d - p_a + \rho_w\, g\, h_w + p_{atm} \qquad ,$$

wobei

$p_g$      der Druck in der Gasfalle ist,

$p_{atm}$    der atmosphärische Luftdruck ist,

$p_a$      der (wegen der gegenüber der Wasserdichte kleineren Phasengemischdichte) den Auftrieb verursachende Druck der Fluidsäule ist,

$p_d$      der strömungsbedingte, dynamische Druck oder Staudruck im Rohrleitungssystem im Bereich der Gasfalle ist

$\rho_w g h_w$   der hydrostatische Druck in Abhängigkeit von der Höhendifferenz zum Gewässerspiegel ist. Dieser Druck verschwindet, wenn die Gasfalle genau auf der Höhe des Gewässerspiegels positioniert wurde, ist positiv, wenn die Gasfalle unterhalb des Gewässerspiegels angeordnet ist und wird oberhalb des Gewässerspiegels negativ (hängende Wassersäule im Injektionsrohr).

Wegen der Druckabhängigkeit der Fluiddichte (Gasdichte proportional zum Umgebungsdruck, entgasende Gasmenge indirekt proportional zum Umgebungsdruck), der komplizierten Strömungsverhältnisse des Phasengemisches und der bezweckten Abtrennung von Gas in der Gasfalle muss der dynamische Druck im Rohrsystem am ablaufenden Prozess optimiert werden. Aus obiger Gleichung kann geschlossen werden, dass durch Festlegung der Höhe $h_w$ in der die Gasfalle positioniert wird, eine obere Druckbegrenzung für den Gasdruck $p_g$ erreicht wird, bei dessen Überschreiten die Strömung im Rohrsystem zum Erliegen kommt. Damit stehen unabhängige, einfach steuerbare Kriterien zur Prozessoptimierung zur Verfügung.

Beispielsweise kann die hängende Fluidsäule (Index "f") im Injektionsrohr unter der Gasfalle durch das Absaugen der freiwerdenden Gase mittels Unterdruckpumpe mit dem Gasfallendruck $p_g = p_{atm} - \rho_f g h_f = p_{atm} - \rho_w g h_w$ stabilisiert werden, wobei $-\rho_w g h_w$ die zur hängenden Fluidsäule äquivalente hängende Wassersäule ist.

Eine geeignete Höhenlage der Gasfalle über der Lagerstätte liegt beispielsweise dann vor, wenn dadurch in der Gasfalle ein Druck vorliegt, bei dem ein gewünschtes Gas und/oder Gasgemisch bereits in der Gasphase vorliegt, während unerwünschte Gase noch untergeordnet in der Gasphase auftreten.

Derartige Bedingungen sind für langsam ablaufende Vorgänge prinzipiell thermodynamisch berechenbar. Der verfahrensgemäß schnell ablaufende Prozess unterliegt komplizierten fluidischen und kinetisch limitierenden Bedingungen für die Entgasung. Unterschiedliche Faktoren wie Strömungscharakter, Strömungsweg, lokale Druckverhältnisse, Gasinventar und Konzentrationen, Art der Phasenübergänge, lokale Wärmetönung, Reaktionen, Phasengrenzflächen (Größe, Geometrie, Wechselwirkungen), Containmenteigenschaften- und Geometrie, Temperatur sind weder in geeigneter Auflösung parametrisierbar noch stehen theoretische Modelle zur Verfügung, die eine Berechnung hinreichend exakt zulassen würden. Insofern besteht die Notwendigkeit der Kontrolle der abgeschiedenen Gase und einer Regelung der ambienten Druckbedingungen bis zur jeweiligen Gasfalle. Dem Fachmann sind diese Abhängigkeiten bekannt und er hat keine Schwierigkeiten durch geeignete Prozesskontrolle der abgeschiedenen Gase und/oder Drücke das System so einzustellen, dass die gewünschten Gase und/oder Gasgemische effizient separiert werden.

Bevorzugt weist die Gasfalle ein regelbares Gasabscheiderventil auf. Sollte die Vorrichtung mehrere Gasfallen aufweisen, so können ein, mehrere oder alle Gasfallen jeweils ein oder mehrere Gasabscheiderventile aufweisen. Hinter dem/den Gasabscheiderventilen können (ggf. gekühlte) Kompressoren (technisch beispielsweise für bis zu 1500 bar verfügbar) angeordnet sein, die das Gas/Gasgemisch auf einen wählbaren Solldruck komprimieren, wobei vorteilhaft nur der jeweilige Differenzdruck zwischen Gasfallendruck und Solldruck für den jeweiligen Gasstrom überwunden werden muss. Der Solldruck kann nach den Dampfdruckkurven derart eingestellt werden, dass $CO_2$ und $H_2S$ bis auf definierte Restpartialdrücke aus dem Gasgemisch auskondensiert, gravimetrisch abgeschieden und flüssig weitertransportiert werden können.

Bevorzugt weist die Vorrichtung mindestens eine Gasfalle auf, die unter dem Wasserspiegel angeordnet ist. Es können auch mehrere oder alle Gasfallen unter dem Wasserspiegel angeordnet sein.

Weist die Vorrichtung mehrere Gasfallen auf, so können die Gasfallen im Rohrsystem derart angeordnet sein, dass

i) die Gasfallen sowohl mit dem Explorationsrohr als auch mit dem Injektionsrohr derart funktional verbunden sind, dass das Fluid aus dem Explorationsrohr über die Gasfallen in das Injektionsrohr überleitbar ist,

ii) die Gasfallen in bestimmten Abständen vertikal übereinander und relativ zur abzureichernden fluidischen Lagerstätte angeordnet und derart funktional miteinander verbunden sind, dass das aufsteigende Fluid aus dem Explorationsrohr in eine erste Gasfalle gelangt die sich auf einem ersten Druckniveau befindet, bei dem ein erstes Gas oder Gasgemisch abgeschieden wird, anschließend das abgereicherte Fluid in eine zweite Gasfalle auf einem wiederum vorgegebenen Druckniveau gelangt, in dem ein zweites Gas/Gasgemisch abgeschieden wird, wobei der erste Druck und der zweite Druck sich voneinander unterscheiden und

iii) die einzelnen Gasfallen jeweils funktional mit einer oder mehreren Gasaufnahmevorrichtungen verbindbar sind oder in einer oder mehreren Gruppen mit einer gemeinsamen Gasaufnahmevorrichtung verbindbar sind.

Unterschiedliche Anordnungen von mehreren Gasfallen und/oder von mehreren erfindungsgemäßen Vorrichtungen können somit als Kaskaden in Abhängigkeit vom Einsatzzweck errichtet werden. Beispielsweise lässt sich eine stationäre raumerfassende Wirkung über geogenen/anthropogenen Entgasungssystemen durch den parallelen Betrieb mehrerer Vertikalkaskaden oder durch Errichtung pyramidaler Strukturen realisieren.

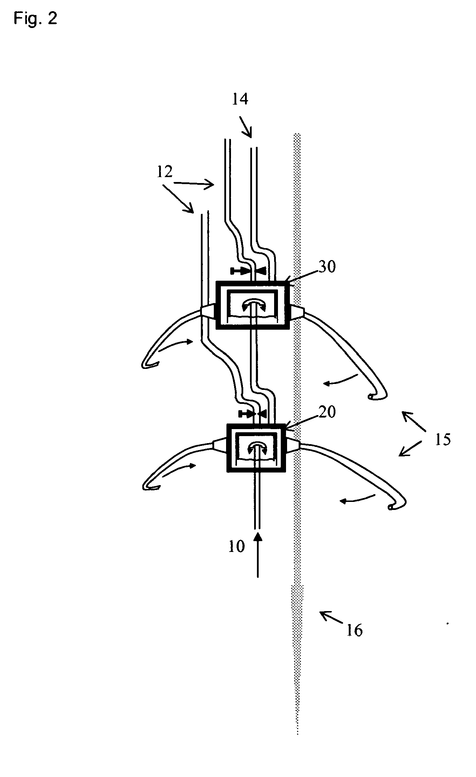

In Figur 2 ist schematisch der Aufbau einer erfindungsgemäßen Vorrichtung mit kaskadierter Gasphasenabtrennung dargestellt. Gezeigt ist ein Ausschnitt einer solchen Vorrichtung mit zwei übereinander angeordneten gravitativen Gasfallen 20 und 30, wobei die erste Gasfalle 20 derart teufen-positioniert ist, dass in dieser Gasfalle Bedingungen herrschen unter denen ein erstes bestimmtes Gas und/oder Gasgemisch abscheidbar ist und die zweite Gasfalle 30 derart teufen-positioniert ist, dass in der zweiten Gasfalle 30 Bedingungen herrschen unter denen ein zweites bestimmtes Gas und/oder Gasgemisch abscheidbar ist. Dabei unterscheiden sich die Bedingungen in der ersten Gasfalle 20 und der zweiten Gasfalle 30 voneinander, so dass sich die Gase und/oder Gasgemische, die jeweils abgeschieden werden ebenfalls voneinander unterscheiden. Beide Gasfallen 20, 30 weisen jeweils mit Gasabscheidventilen versehene Gasleitungen 12 zum Abführen des jeweils abgeschiedenen Gases oder Gasgemisches auf. Die beiden Gasfallen 20 und 30 können Wasseransaugsysteme 15 aufweisen, die verstellbar und/oder rotierend angeordnet sein können. Die Wasseransaugsysteme dienen der Wassernachführung in der erfindungsgemäßen Vorrichtung und können beispielsweise als durch das aufsteigende Wasser getriebene Wasserstrahlpumpen ausgebildet sein und ggf. mit regel- und/oder steuerbaren Absperrventilen ausgestattet sein. Die beiden Gasfallen 20 und 30 sind derart über Phasengemischleitungen 14 miteinander verbunden, dass das um das erste Gas oder Gasgemisch abgereicherte Phasengemisch die erste Gasfalle 20 verlassen kann und der zweiten Gasfalle 30 derart zugeführt wird, dass dort die Abscheidung eines zweiten Gases oder Gasgemisches erfolgen kann. Nach Abschluss aller Kaskaden bzw. Gasfallen der erfindungsgemäßen Vorrichtung wird das abgereicherte Fluid und/oder unerwünschte Gase ,wie beispielsweise CO2 über ein Injektionsrohr 16 zurückgeführt und ggf in einer geeigneten Tiefe verpresst. Das Injektionsrohr 16 kann z.B. auch zur Verankerung der erfindungsgemäßen Vorrichtung ausgelegt sein.

Mit der technischen Möglichkeit einer kaskasdierten Gasphasenabtrennung (siehe Fig. 2) entsteht eine effektive Variante zur Gasseparation mit wirtschaftlicher Tragweite, da für hinreichend tief liegende fluidische Lagerstätten die nötige Energie vom Gewässer selbst zur Verfügung gestellt wird.

Dabei werden folgende druck- und temperaturabhängige Separationsmechanismen höhengestaffelt kombiniert:

Die Phasenseparation von gelösten Gasen und Lösungsmittel (Fluid) deren Konzentration durch Druckmiedrigung oder Temperaturerhöhung die individuellen Sättigungskonzentrationen überschreitet. Der Aufstieg im Explorationsrohr führt nach Überschreiten der Sättigungskonzentrationen zu einer kontinuierlichen Phasenseparation, deren Effekt insbesondere von der Druckabhängigkeit der Sättigungskonzentrationen bestimmt wird.

Für überkritische Gase führt diese Phasenseparation zur kinetisch durch Eigenschaften der Strömung (z.B.

Turbulenz) und des Gefäßsystems (z.B. poröser Körper, hydrophobe Oberflächen) beeinflussbaren, höhenabhängigen Formierung einer Gasphase, die bis zur Gasfalle volumetrisch anwächst und hier abgetrennt werden kann.

Für Gase deren kritische Temperatur (s. Tab. 1) oberhalb der gegebenen Fluidtemperatur liegt, führt die Phasenseparation zur Entmischung von Gas und Fluid, wobei das Gas zu Tröpfchen aggregiert und mit dem Fluid eine gemeinsame flüssige Mischphase bildet, die die Gasfalle passiert, während sich in der ggf. bereits durch andere Gase geformten Gasphase der Dampfdruck des betreffenden Gases einstellt. Das Verhältnis von erreichtem Dampfdruck zu Gasphasendruck bestimmt die Verunreinigung des Gasgemisches durch das verdampfende Gas.

Erst bei weiterer Druckerniedrigung bis auf einen gasabhängigen kritischen Druck verdampft die flüssige Gasphase vollständig aus der Mischphase. Dabei hängen die Verdampfungskinetik und der Dampfdruck der sich bildenden Gasphase von Druck und Temperatur und die Kinetik zusätzlich von der Größe und den Eigenschaften den Phasengrenzflächen (fest-flüssig-flüssig) sowie der Phasendynamik ab.

Infolge des Verdampfens der flüssigen Gasphase und ggf. in Folge ablaufender Reaktionen kann dem Fluid Wärme entzogen werden. Dieser Effekt kann zur Kühlung der Kompressoren genutzt werden, oder durch geeignete Bauweise der Explorationsrohre (z.B. große Wärmeübergangsflächen zum umliegenden Gewässer, hohe Wärmeleitfähigkeit des Gefäßmaterials) und einen intensiven Wand-Fluid-Wärmeaustausch vom Umgebungswasser gepuffert werden.

In Tabelle 1 dargestellt sind ausgewählte Eigenschaften von für Gewässer wichtigen Gasen zusammengefasst. Die kritische Temperatur gibt die obere Grenze an, bis zu der ein Gas verflüssigt werden kann. Der kritische Druck beschreibt den dafür nötigen Druck kurz unterhalb der kritischen Temperatur. Der Tabelle kann entnommen werden, dass die Gase Methan, Sauerstoff, Stickstoff, Argon und Helium unter den Bedingungen flüssigen Wassers nicht verflüssigt werden können, wohl aber Schwefelwasserstoff und Kohlendioxid. Ferner kann der Tabelle entnommen werden, dass die verschiedenen Gase deutliche Unterschiede der Dampfdrücke aufweisen, also der Drücke, bis zu denen die kondensierten Gase für gegebene Temperatur eine eigene Dampfphase aufbauen bzw. in einem vorhandenen Gasgemisch im Phasengleichgewicht vertreten sind.

Tab. 1: Ausgewählte Realgaseigenschaften

| Physikalische Eigenschaft / Gas | $H_2S$ | $CH_4$ | $CO_2$ | $O_2$ | $N_2$ | Ar | He |
|---|---|---|---|---|---|---|---|
| Kritische Temperatur [°C] | 100.1 | -83 | 31 | -119 | -147 | -122 | -268 |
| Kritischer Druck [bar] | 89.4 | 46 | 73.8 | 50. 4 | 34 | 48.7 | 2.3 |
| Dampfdruck bei 21 °C [bar] | 18.2 | - | 58.5 | - | - | - | - |

Werden nun die Gasfallen der Kaskade derart teufen-positioniert, dass das $CO_2$ noch untergeordnet in die Gasphase übertritt, wird Methan als Gasphase effektiv von $CO_2$ und $H_2S$ separiert. Ein untergeordneter Übergang im Sinne der vorliegenden Erfindung kann beispielsweise dann vorliegen, wenn das unerwünschte Gas oder Gasgemisch gerade noch nicht in einer Menge größer als 1 - 10 % im separierten Gas und/oder Gasgemisch auftritt. Ein untergeordneter Übergang kann auch dann vorliegen, wenn das unerwünschte Gas oder Gasgemisch gerade noch nicht in einer Menge größer als 1 -10 % der im Fluid ursprünglich gelösten Menge an diesem Gas oder Gasgemisch auftritt. In jedem Fall wird die erreichbare oder die nötige Separationsgüte neben den physikalischen Eigenschaften der Gase, von der Zusammensetzung der fluidischen Lagerstätte, deren Teufe, sowie anlagen- und verfahrensspezifischen Parametern abhängen und kann durch letztere in weiten Grenzen gesteuert werden. Der Fachmann ist sich dessen bewusst und hat keine Schwierigkeiten die anlagen- und verfahrensspezifischen Parameter zu bestimmen, einzustellen und die Anlage optimiert für den jeweiligen Einsatzzweck zu betreiben. Erlaubt die Entgasungshöhe innerhalb des Explorationsrohres oder die Lagerstättenzusammensetzung keine hinreichende Trennung der Gase /Gasgemische, so kann durch die nachgeschalteten Kompressoren jederzeit Methan mit definierbarer Verunreinigung an $CO_2$ und $H_2S$ gefördert werden.

Wird das methanabgereicherte Wasser nun innerhalb der Kaskade bis in eine Höhe geführt, in der unter ambienten Bedingungen $H_2S$ noch untergeordnet entgast, entsteht in einer dort positionierten Gasfalle eine hochangereicherte $CO_2$-Gasphase, während $H_2S$ noch nicht in einer nennenswerten Größenordnung in die Gasphase übertritt.

Die Teufen der Gasfallen sind für gegebene Temperatur und eingestellte Fluid-Strömungsverhältnisse einfach durch den mit dem Gasphasendruck $p_g$ korrespondierenden hydrostatischen Druck justierbar.

Das Restgas, das nun zu wesentlichen Anteilen (man beachte: $H_2S$ besitzt die höchste Wasserlöslichkeit unter den betrachteten Gasen, gefolgt von $CO_2$) aus Schwefelwasserstoff bestehen kann, kann letztlich in einer Gasfalle oberhalb der Gewässeroberfläche effektiv entgast werden. Hierbei kann zusätzlich der per Vakuumpumpe in aufsteigender und/oder hängender Wassersäule des reinfiltrierenden Fluids aufbaubarer Unterdruck genutzt werden. Das somit gasabgereicherte Wasser wird gravitativ auf eine beliebige (da nahezu kräftefrei) und damit nach geochemischen, biologischen oder physikalischen Kriterien vorgebbare Teufe reiniziert und/oder verpresst. Die separierten Gase werden durch unterschiedliche Rohre / Schläuche zur Explorationsplattform geführt und können hier in geeigneter Weise weiter verarbeitet werden.

Das über die Kompression bereits verflüssigte $CO_2$ kann innerhalb der Kaskade durch eine separate Leitung auf eine vorgebbare Teufe bilanzneutral (z.B. auf den Gewässerboden) rückgeführt werden. Das verflüssigte $CO_2$ besitzt ab einer Teufe größer 3000 m bis zur Temperatur von 281.8 K eine größere Dichte als Wasser und würde tendenziell absinken, sich in morphologischen Senken aufstauen, in die Gesteinsphase eindringen, sich im angrenzenden Wasser lösen und verteilen sowie mikrobiell umgesetzt werden. Damit kann diffus in der Meereswassersäule verteiltes $CO_2$ der globalen Meereszirkulation effizient über Kilojahre entzogen und lokal aufkonzentriert werden. Neben der Speicherung in der Tiefsee, kann auch eine Einspeisung in den Meeresboden vorgenommen werden. Die Wärme die bei der Lösung von $CO_2$ im Bodenwasser entsteht, kann beispielsweise dabei zur zusätzlichen Mobilisierung von Methan aus risikobehafteten Methanhydratlagerstätten eingesetzt werden.

Schwefel kann reduktiv (beispielsweise in Reaktion mit Chlor) aus dem separierten $H_2S$ gewonnen werden.

Damit sind Verfahren und Vorrichtungen angegeben, womit Gasakkumulationen und treibhauswirksame Gase effizient (enorme natürlich verfügbare Druckdifferenzen + z.T. sehr hohe Gaslöslichkeiten, damit kleine Phasengemischdichten erreichbar) separierbar sind und dem globalen Stoffkreislauf entzogen werden können.

Da die Weltmeere eine große Oberfläche (= Austauschfläche zur Atmosphäre) besitzen und über eine ausgeprägte konzentrationsausgleichende Zirkulation verfügen, kann sich hier der anthropogen mögliche d.h. punktförmige Eingriff in den Gashaushalt zur lokalen "hot-spot" Abreicherung nachhaltig auf eine Stabilisierung von Klima und Meerespopulation auswirken.

Die erfindungsgemäße Vorrichtung weist neben dem Rohrsystem mindestens eine regelbare Anlage auf, die derart funktional mit dem Rohrsystem verbunden ist, dass ein ausgewählter Staudruck im Rohrsystem und damit eine kontrollierbare Strömung vom Explorationsrohr, durch die Gasfalle, hin zum Injektionsrohr erzeugbar ist. Die regelbare Anlage kann eine Turbine sein.

Bevorzugt weist die Turbine mindestens ein Flügelrad auf, welches derart in der Achse drehbar gelagert ist, dass der Staudruck im Rohrsystem regelbar ist.

Bevorzugt sind alle Flügelräder der Turbine entsprechend in der Achse drehbar gelagert.

Bevorzugt ist die mindestens eine Turbine derart ausgestaltet, dass die Turbine bei selbständigem Wasserstrom dem Strömungssystem mechanische Energie entzieht und diese zur Energiegewinnung bereitstellt.

Innerhalb des Rohrsystems können sich eine oder mehrere Turbinen befinden. Diese können mit je einem kombinierten Motor / Generator-System zusammenwirken und erzeugen eine Zirkulationsströmung durch das Rohrsystem. Dadurch wird tiefes Wasser auf ein geringeres hydrostatisches Druckniveau bewegt, über die Gasfalle geleitet und durch die Injektionsrohre in einen wählbaren Wasserhorizont wiederverpresst. In dem Grade, in dem es aufstiegsbedingt zur Gasphasenseparation kommt, führt die geringer werdende Phasengemischdichte zu einer auftriebsgebundenen Eigendynamik. Entsprechend kann die antreibende ortsspezifische Turbinenleistung gedrosselt werden. Übersteigt nun die Fluidgeschwindigkeit einen kritischen Wert, entziehen die Turbinen dem fluidischen System mechanische Energie (Staudruckverlagerung von Abstrom- auf Anstromseite der Turbine) und treiben beispielsweise Motoren an, die nunmehr als Generatoren elektrische Energie abgeben. Werden die Anstromflächen der Flügelräder der Turbinen ähnlich wie bei Windkrafträdern in ihrer Achse drehbar gelagert, kann der Staudruck in einem weiten Dynamikbereich turbinenspezifisch geregelt werden und die dabei erzielte Rotationsenergie über ein geeignetes Stellgetriebe effektiv in elektrische Energie umgesetzt werden. Die Staudruckregelung ermöglicht eine teufenabhängige Steuerung der Entgasungskinetik. Dabei können beispielsweise tiefer gelegene Turbinen Energie von höher gelegenen beziehen und umgekehrt.

Die erfindungsgemäße Vorrichtung kann als mobil operierende Vorrichtung ausgestaltet sein. Rohrsystem und Gasfalle bilden ein mobil operierendes System. Die erfindungsgemäße Vorrichtung kann mit einer Explorations- und/ oder Verarbeitungsplattform verbunden sein. Die Verarbeitungsplattform kann per flexibler Schlauchverbindung angekoppelt sein. Das Rohrsystem ist so ausgelegt / steuerbar, dass die Rückstoßkraft der selbständigen Wasserzirkulation zur gerichteten Bewegung oder zur Rotation des Explorationssystems führt. Das somit mobile Explorationssystem ist hinsichtlich seiner Geometrie strömungstechnisch optimiert und erlaubt eine energiearme Eigenbewegung. Die Gasfalle (n) kann kontinuierlich oder diskontinuierlich (z.B. auch passiv über Schwerkraftregelung) betrieben werden. Findet beispielsweise eine diskontinuierliche Betriebsweise Anwendung, so führt dies zu einer periodischen Entleerung und Wiederbefüllung der Gasfalle(n). Unterschiedliche Gasfüllstände in der Gasfalle ändern jedoch den Auftrieb wodurch periodisch unterschiedliche Höhen im Gewässer angefahren werden. Gleichzeitig führt der plötzliche Druckabfall in der Gasfalle nach Öffnung des Gasabscheideventils zu einer Erhöhung der Druckdifferenz zwischen den Fluideinlässen und der Gasfalle. Dieser Effekt kann gezielt zur Induzierung der Phasenseparation eingesetzt werden, wenn die Injektionsrohre über differenzdruckgesteuerte Rückschlagklappen verfügen.

Eine Ausrichtung des-/der Rohrenden erlaubt deren passive Positionierung (gerichtete Bewegung oder Rotation). Ferner könnten aktive Antriebe vorgesehen werden.

In einer bevorzugten Ausführungsform ist die gesamte erfindungsgemäße Vorrichtung unter dem Wasserspiegel angeordnet.

Die Erfindung bezieht sich auch auf ein Verfahren zur selektiven Abreicherung von Gasen und/oder Gasgemischen aus fluidischen Gewässerlagerstätten, umfassend die Schritte:

a) Aufnahme des abzureichernden Fluides,

b) Erzeugung von geeigneten ersten Druckverhältnissen durch kontrollierte Hebung des Fluids, unter denen ein erstes Gas und/oder Gasgemisch aus dem Fluid abgeschieden wird und in die Gasphase übertritt,

c) Überführung des Fluides in eine Gasfalle und Separation der Gasphase von dem restlichen Fluid, wobei die Druckverhältnisse in der Gasfalle durch selektive Ansteuerung ausgewählter Teufen erzeugt wird,

d) Gegebenenfalls Überführung des abgeschiedenen Gases und/oder Gasgemisches in eine Gasaufnahmevorrichtung,

e) mindestens einmalige Wiederholung der Schritte b) bis d), wobei jeweils weitere Druckverhältnisse durch selektive Ansteuerung ausgewählter Teufen erzeugt werden, bei denen ein anderes Gas und/oder Gasgemisch abgeschieden wird,

f) Rückführung des abgereicherten Fluides.

In dem erfindungsgemäßen Verfahren werden die Druckverhältnisse in der Gasfalle und/oder den Gasfallen durch selektive Ansteuerung ausgewählter Teufen erzeugt.

In einer bevorzugten Ausführungsform des Verfahrens werden die Druckverhältnisse in Schritt b) durch eine Kombination ausgewählter Teufen und des, durch eine regelbare Anlage, bevorzugt eine Turbine, geregelten Staudrucks erzeugt.

In einer weiteren bevorzugten Ausführungsform des erfindungsgemäßen Verfahrens wird eine Gasfalle derart teufen-positioniert, dass ein erwünschtes Gas zu einem wesentlichen Anteil in der Gasfalle angereichert wird, wonach der maximale Anteil eines unerwünschten Gases in der separierten Gasphase durch das Verhältnis von dessen Dampfdruck zum eingestellten Gasphasendruck bestimmt wird. Ein wesentlicher Anteil kann beispielsweise dann vorliegen, wenn das erwünschte Gas mehr als die Hälfte der in der Gasfalle separierten Gasphase ausmacht.

In einer besonders bevorzugten Ausführungsform des erfindungsgemäßen Verfahrens wird eine Gasfalle derart teufen-positioniert, dass ein unerwünschtes Gas oder Gasgemisch gerade noch nicht in einer anwendungsbezogen definierten Menge, beispielsweise 1 - 10 %, im separierten Gas und/oder Gasgemisch auftritt oder das unerwünschte Gas oder Gasgemisch gerade noch nicht in einer Menge größer als 1 - 10 % der im Fluid gelösten Menge an diesem Gas oder Gasgemisch im separierten Gas vorhanden ist.

Das erfindungsgemäße Verfahren kann derart ausgestaltet sein, dass eine Gasfalle derart teufen-positioniert wird, dass ein erwünschtes Gas mehr als die Hälfte der in der Gasfalle separierten Gasphase ausmacht.

Das erfindungsgemäße Verfahren kann weiterhin derart ausgestaltet sein, dass hinter den Gasabscheideventilen der Gasfallen (ggf. gekühlte) Kompressoren angeordnet sind und derart betrieben werden, dass unabhängig von der aktuellen Vortrennung der Gase innerhalb der Gasfallen stets Standards für die Partialdrücke von $CO_2$ (z.B. < 5%) und $H_2S$ (z.B. < 1 %) im Methanförderstrom eingehalten werden.

Bevorzugt ist das erwünschte Gas das überkritische Methan und die unerwünschten Gase die druck-verflüssigbaren Gase $CO_2$ und/oder $H_2S$.

Eine bevorzugte Ausführungsform des erfindungsgemäßen Verfahrens ist dadurch gekennzeichnet, dass das unerwünschte Gas $CO_2$ ist und das unerwünschte Gas in eine geeignete Tiefe der fluidischen Gewässerlagerstätte verpresst wird.

In einer weiteren bevorzugten Ausführungsform des erfindungsgemäßen Verfahrens werden gravitative Gasfallen derart teufen-positioniert, dass $CH_4$, $CO_2$ und $H_2S$ optimal voneinander getrennt werden können, wobei das $CO_2$ bilanzneutral an geeigneter Stelle verpresst werden kann.

Das erfindungsgemäße Verfahren kann kontinuierlich oder diskontinuierlich betrieben werden.

Die Erfindung bezieht sich auch auf Verwendungen der erfindungsgemäßen Vorrichtungen und Verfahren.

So kann eine erfindungsgemäße Vorrichtung oder ein erfindungsgemäßes Verfahren zur Abreicherung von Gasen, bevorzugt $CH_4$, $H_2S$ und/oder $CO_2$ aus Gewässern, insbesondere aus Ozeanen verwendet werden.

Die erfindungsgemäßen Vorrichtungen und Verfahren können zur präventiven Gewässerreinigung verwendet werden oder zur Gewinnung von Gasen aus Gas-Wassergemischen, die in Gewässern lagern.

Die erfindungsgemäßen Vorrichtungen und Verfahren können dazu verwendet werden, Gase aus fluidischen Lagerstätten in vom Anwender weitgehend festlegbaren Reinheiten zu gewinnen.

**Vorteile der Erfindung**

Die Erfindung dient der effektiven Steuerung einer spontan ablaufenden Phasenseparation. Die Erfindung ermöglicht die Trennung des dabei freigesetzten Gasgemisches und die Gewinnung von angereicherten Gaskomponenten in geeignet positionierten Gasfallen.

Aus ökologischer Sicht dient die Erfindung der Abreicherung von Gasen (CH$_4$, H$_2$S, CO$_2$) aus Gewässern, insbesondere tiefen Gewässern, wie beispielsweise Ozeane, und damit sowohl der Katastrophenabwehr als auch der langfristigen Reduzierung klimarelevanter Gasflüsse aus Ozeanen in die Atmosphäre.

Aus ökonomischer Sicht resultiert eine Vorrichtung und ein Verfahren, das den effizienten Abbau aquatischer Gaslagerstätten ermöglicht und das die kinetische Energie eines spontan entstehenden Gas-Wasser-Phasengemisches in elektrischen Strom umsetzen kann.

Durch die Kopplung dieser ökologisch- / ökonomischen Aspekte wird je nach konkreter Lagerstättensituation ein kostengünstiges / kostendeckendes Verfahren zur präventiven Gewässersanierung möglich - oder - ein ökologisch gewinnbringendes Explorationsverfahren, dass auch im Zusammenhang mit dem Abbau von Methanhydratlagerstätten (Auffangen von Abbauverlusten, Separation von Gaskomponenten, Gewährleistung der Betriebssicherheit des Methanabbaus) zum Einsatz kommen kann.

Dem Verfahren liegt zugrunde, den dargelegten Entgasungsmechanismus eines die Sättigungskonzentration überwindenden Gelöstgases kontrolliert technisch umzusetzen und dadurch

a) das Risiko einer nicht mehr beeinflussbaren Entgasung tiefer Gewässer einzudämmen (Sanierungs- und ökologischer Aspekt),

b) unterschiedliche Gase effizient zu separieren,

c) klimarelevante Gase wie beispielsweise CO$_2$ bilanzneutral aus der Wassersäule abzureichern und auf den Gewässerboden zu verpressen und somit nachhaltig aus dem Zirkulationsbereich der Gewässer zu entfernen,

d) weitere klimarelevante Gase wie Methan und Schwefelwasserstoff effizient voneinander zu separieren und günstige Voraussetzungen für deren getrennte technische Verwertung zu schaffen,

e) eine Technologie zu schaffen, die die ökonomische Exploration tiefer Gasakkumulationen (z.B. für Methan) in Gewässern im klassischen Sinn der Ausbeutung einer Lagerstätte - hier aber einer fluidischen Lagerstätte erlaubt,

f) und somit von Bedeutung für die Zukunftsfähigkeit des Lebensraumes Erde ist.

Durch Verwendung eines Kompressors, der direkt einer Gasfalle mit Gasabscheideventil nachgeschaltet ist, kann eine Energieeinsparung im Vergleich zu einer Anlage mit einem externen, ausgelagerten Kompressor erreicht werden. In der Regel wird eine Kompression der abgeschiedenen Gase notwendig sein, um die Gase beispielsweise in einer Pipeline von einer Förderplattform abtransportieren zu können. Diese Kompression wird für gewöhnlich erst nach Förderung des Gases eingeleitet. Erfolgt die Kompression bereits direkt nach der Abscheidung, so braucht der Kompressor nur noch einen Differenzdruck aufzubauen, der die Differenz zwischen einem Transportdruck und dem Druck in der Gasfalle ausgleicht.

Figuren

Fig. 1    Schematische Darstellung einer gravitativen Gasfalle

Fig. 2    Schematische Darstellung eines kaskadierten Phasenseparationssystems mit Gastrennung sowie Reinjektionsleitung für Wasser und Verpressleitung für CO$_2$.

**Patentansprüche**

1.  Vorrichtung zur Abreicherung von Gasen aus Gewässern, umfassend:

    ein Rohrsystem, welches

        i) ein Explorationsrohr zur Aufnahme des gasenthaltenden Fluids (10)
        ii) ein Injektionsrohr (16) zur Rückführung des gasabgereicherten Fluids und
        iii) mindestens eine Gasfalle (20) aufweist, die derart in der Vorrichtung angeordnet ist, dass in der Gasfalle ein ausgewählter Druck erzeugbar ist,
wobei die Gasfalle (20) sowohl mit dem Explorationsrohr als auch mit dem Injektionsrohr (16) derart funktional verbunden ist, dass das Fluid aus dem Explorationsrohr über die Gasfalle in das Injektionsrohr überleitbar ist und die Gasfalle funktional mit einer Gasaufnahmevorrichtung verbindbar ausgestaltet ist;

**dadurch gekennzeichnet, dass**
das Rohrsystem eine Mehrzahl von Gasfallen (20,30) aufweist, wobei

I) die Gasfallen (20,30) sowohl mit dem Explorationsrohr als auch mit dem Injektionsrohr (16) derart funktional verbunden sind, dass das Fluid (10)aus dem Explorationsrohr über die Gasfallen in das Injektionsrohr überleitbar ist,
II) die Gasfallen in bestimmten Abständen vertikal übereinander und relativ zur abzureichernden fluidischen Lagerstätte angeordnet und derart funktional miteinander verbunden sind, dass das aufsteigende Fluid aus dem Explorationsrohr in eine erste Gasfalle gelangt die sich auf einem ersten Druckniveau befindet, bei dem ein erstes Gas oder Gasgemisch abgeschieden wird, anschließend das abgereicherte Fluid in eine zweite Gasfalle auf einem wiederum vorgegebenen Druckniveau gelangt, in dem ein zweites Gas/Gasgemisch abgeschieden wird, wobei der erste Druck und der zweite Druck sich voneinander unterscheiden und
III) die einzelnen Gasfallen jeweils funktional mit einer oder mehreren Gasaufnahmevorrichtungen verbindbar sind oder die Gasfallen in einer oder mehreren Gruppen mit einer gemeinsamen Gasaufnahmevorrichtung verbindbar sind.

2. Vorrichtung nach Anspruch 1, **dadurch gekennzeichnet, dass** die Vorrichtung zusätzlich mindestens eine regelbare Anlage umfasst, die derart funktional mit dem Rohrsystem verbunden ist, dass ein ausgewählter Staudruck im Rohrsystem und damit eine kontrollierbare Strömung vom Explorationsrohr, durch die Gasfalle, hin zum Injektionsrohr erzeugbar ist.

3. Vorrichtung nach Anspruch 2, **dadurch gekennzeichnet, dass** mindestens eine regelbare Anlage ein Muffe ist, die derart funktional mit der Vorrichtung gemäß Anspruch 1 verbunden ist, dass der Durchmesser an mindestens einer Stelle im Rohrsystem kontrolliert verjüngbar ist.

4. Vorrichtung nach Anspruch 2 oder 3, **dadurch gekennzeichnet, dass** mindestens eine regelbare Anlage eine Turbine ist.

5. Vorrichtung nach einem der vorhergehenden Ansprüche, **dadurch gekennzeichnet, dass** der ausgewählte Druck in einer, mehreren oder allen Gasfallen durch Festlegung der Höhenlage der jeweiligen Gasfalle über der abzureichernden fluidischen Lagerstätte erzeugbar ist.

6. Vorrichtung nach einem der vorhergehenden Ansprüche, **dadurch gekennzeichnet, dass** eine, mehrere oder alle Gasfallen unter dem Wasserspiegel angeordnet sind.

7. Vorrichtung nach einem der vorhergehenden Ansprüche, **dadurch gekennzeichnet, dass** das Rohrsystems mindestens teilweise mit hydrophobem Material beschichtet ist.

8. Verfahren zur selektiven Abreicherung von Gasen und/oder Gasgemischen aus fluidischen Gewässerlagerstätten, umfassend die Schritte:

a) Aufnahme des abzureichernden Fluides,
b) Erzeugung von geeigneten ersten Druckverhältnissen durch kontrollierte Hebung des Fluids, unter denen ein erstes Gas und/oder Gasgemisch aus dem Fluid abgeschieden wird und in die Gasphase übertritt,
c) Überführung des Fluides in eine Gasfalle und Separation der Gasphase von dem restlichen Fluid, wobei die Druckverhältnisse in der Gasfalle durch selektive Ansteuerung ausgewählter Teufen erzeugt wird,
d) Gegebenenfalls Überführung des abgeschiedenen Gases und/oder Gasgemisches in eine Gasaufnahmevorrichtung,
e) mindestens einmalige Wiederholung der Schritte b) bis d), wobei jeweils weitere Druckverhältnisse durch selektive Ansteuerung ausgewählter Teufen erzeugt werden, bei denen ein anderes Gas und/oder Gasgemisch abgeschieden wird,
f) Rückführung des abgereicherten Fluides.

9. Verfahren nach Anspruch 8, **dadurch gekennzeichnet, dass** eine Gasfalle derart teufen-positioniert wird, dass ein erwünschtes Gas zu einem wesentlichen Anteil in der Gasfalle angereichert wird, wonach der maximale Anteil eines unerwünschten Gases in der separierten Gasphase durch das Verhältnis von dessen Dampfdruck zum eingestellten Gasphasendruck bestimmt wird.

10. Verfahren nach Anspruch 8 oder 9, **dadurch gekennzeichnet, dass** das erwünschte Gas Methan ist und das unerwünschte Gas $CO_2$ und/oder $H_2S$ ist.

11. Verfahren nach einem der Ansprüche 8 bis 10, **dadurch gekennzeichnet, dass** gravitative Gasfallen derart teufen-positioniert werden, dass $CH_4$, $CO_2$ und/oder $H_2S$ selektiv voneinander trennbar sind.

12. Verfahren nach Anspruch 8 oder 9, **dadurch gekennzeichnet, dass** das unerwünschte Gas $CO_2$ ist und das unerwünschte Gas in eine geeignete Tiefe der fluidischen Gewässerlagerstätte verpresst wird.

13. Verwendung einer Vorrichtung nach einem der Ansprüche 1 bis 7 oder eines Verfahrens nach einem der Ansprüche 8 bis 12 zur präventiven Gewässerreinigung.

14. Verwendung einer Vorrichtung nach einem der Ansprüche 1 bis 7 oder eines Verfahrens nach einem der Ansprüche 8 bis 12 zur Gewinnung von Gasen aus Fluiden, die in Gewässern lagern.

15. Verwendung einer Vorrichtung nach einem der Ansprüche 1 bis 7 oder eines Verfahrens nach einem der Ansprüche 8 bis 12 zur Gewinnung von Gasen aus fluidischen Lagerstätten in festlegbaren Reinheiten.

**Claims**

1. A device for the depletion of gases from waterways, said device comprising:

   a pipe system, which has

   i) an exploration pipe for receiving the fluid (10) containing the gas,
   ii) an injection pipe (16) for returning the fluid depleted of the gas, and
   iii) at least one gas trap (20), which is arranged in the device in such a way that a selected pressure can be generated in the gas trap,
   the gas trap (20) being functionally connected to both the exploration pipe and the injection pipe (16) in such a way that the fluid can be transferred from the exploration pipe via the gas trap into the injection pipe and the gas trap being designed so as to be functionally connectable to a gas receiving device;

   **characterised in that**
   the pipe system has a plurality of gas traps (20, 30),

   I) the gas traps (20, 30) being functionally connected to both the exploration pipe and the injection pipe (16) in such a way that the fluid (10) can be transferred from the exploration pipe via the gas traps into the injection pipe,
   II) the gas traps being arranged at certain distances vertically one above the other and relative to the fluidic deposit to be depleted and being functionally interconnected in such a way that the fluid rising from the exploration pipe reaches a first gas trap having a first pressure level, at which a first gas or gas mixture is separated, the enriched fluid subsequently reaches a second gas trap, again having a predefined pressure level, in which a second gas/gas mixture is separated, the first pressure and the second pressure being different from one another, and
   III) the individual gas traps each being functionally connectable to one or several gas receiving devices or the gas traps in one or more groups being connectable to a common gas receiving device.

2. The device according to claim 1, **characterised in that** the device additionally comprises at least one controllable system, which is functionally connected to the pipe system in such a way that a selected dynamic pressure in the pipe system and therefore a controllable flow from the exploration pipe, through the gas trap, and up to the injection pipe can be generated.

3. The device according to claim 2, **characterised in that** at least one controllable system is a sleeve, which is functionally connected to the device according to claim 1 in such a way that the diameter can be controllably tapered, at least at one point in the pipe system.

4. The device according to claim 2 or 3, **characterised in that** at least one controllable system is a turbine.

5. The device according to one of the preceding claims, **characterised in that** the selective pressure in one, several, or all gas traps can be generated by defining the height of the respective gas trap above the fluidic deposit to be depleted.

6. The device according to one of the preceding claims, **characterised in that** one, several, or all gas traps are arranged below the water level.

7. The device according to one of the preceding claims, **characterised in that** the pipe system is coated, at least in part, with hydrophobic material.

8. A method for selective depletion of gases and/or gas mixtures from fluidic waterway deposits, said method comprising the following steps:

   a) receiving the fluid to be depleted,
   b) generating suitable first pressure conditions by controllably raising the fluid, whereby a first gas and/or gas mixture is separated from the fluid and is converted into the gas phase,
   c) transporting the fluid into a gas trap and separating the gas phase from the remaining fluid, the pressure conditions in the gas trap being produced by selectively targeting selected depths,
   d) optionally transporting the separated gas and/or gas mixture into a first gas receiving device,
   e) repeating steps b) to d) at least once, further pressure conditions being produced in each case by selectively targeting selected depths, a different gas and/or gas mixture being separated under such conditions,
   f) returning the depleted fluid.

9. The method according to claim 8, **characterised in that** a gas trap is positioned at a depth in such a way that a desired gas is enriched to a significant degree in the gas trap, whereby the maximum concentration of an undesired gas in the separated gas phase is determined by the ratio of its vapour pressure to the set gas phase pressure.

10. The method according to claim 8 or 9, **characterised in that** the desired gas is methane and the undesired gas is $CO_2$ and/or $H_2S$.

11. The method according to one of claims 8 to 10, **characterised in that** gravitative gas traps are positioned at a depth in such a way that $CH_4$, $CO_2$ and/or $H_2S$ can be selectively separated from one another.

12. The method according to claim 8 or 9, **characterised in that** the undesired gas is $CO_2$ and the undesired gas is injected at a suitable depth of the fluidic waterway deposit.

13. Use of a device according to one of claims 1 to 7 or of a method according to one of claims 8 to 12 for preventative waterway purification.

14. Use of a devise according to one of claims 1 to 7 or of a method according to one of claims 8 to 12 for recovery of gases from fluids deposited in waterways.

15. Use of a device according to one of claims 1 to 7 or of a method according to one of claims 8 to 12 for recovery of gases from fluidic deposits in definable purifies.

**Revendications**

1. Dispositif pour l'appauvrissement de gaz issus de cours d'eau, comprenant :

   un système tubulaire, lequel comporte

i) un tube d'exploration pour réceptionner le fluide contenant du gaz (10),

ii) un tube d'injection (16) pour recycler le fluide appauvri en gaz et

iii) au moins un tube absorbant (20) qui est disposé dans le dispositif de telle sorte qu'une pression choisie puisse être créée dans le tube absorbant,

le tube absorbant (20) étant en liaison fonctionnelle aussi bien avec le tube d'exploration qu'avec le tube d'injection (16), de telle sorte que le fluide issu du tube d'exploration soit transférable du tube d'exploration via le tube absorbant dans le tube d'injection et que le tube absorbant soit conçu pour pouvoir être mis en liaison fonctionnelle avec un dispositif d'absorption du gaz,

**caractérisé en ce que**

le système tubulaire comporte une pluralité de tubes absorbants (20, 30),

I) les tubes absorbants (20, 30) étant en liaison fonctionnelle aussi bien avec le tube d'exploration qu'avec le tube d'injection (16), de telle sorte que le fluide (10) issu du tube d'exploration spot transférable via les tubes absorbants dans le tube d'injection,

II) les tubes absorbants étant disposés à des distances définies verticalement les unes au-dessus des autres et relativement au lit fluidique devant être appauvri et étant en liaison fonctionnelle les uns avec les autres, de telle sorte que le fluide montant hors du tube d'exploration arrive dans un premier tube absorbant qui se trouve à un premier niveau de pression auquel un premier gaz ou mélange gazeux est séparé, qu'à la suite le fluide appauvri arrive dans un deuxième tube absorbant à un niveau de pression également prédéfini, auquel un deuxième gaz ou mélange gazeux est séparé, la première pression et la deuxième pression étant différentes l'une de l'autre et

III) les tubes absorbants individuels pouvant être reliés chacun avec un ou plusieurs dispositifs d'absorption du gaz ou les tubes absorbants pouvant être reliés en un ou en plusieurs groupes doté(s) d'un dispositif commun d'absorption du gaz.

2. Dispositif selon la revendication 1, **caractérisé en ce que** le dispositif comprend en supplément au moins une installation ajustable, qui est en liaison fonctionnelle avec le système tubulaire de sorte à créer une pression de retenue choisie dans le système tubulaire et de ce fait un écoulement contrôlable du tube d'exploration, à travers le tube absorbant vers le tube d'injection.

3. Dispositif selon la revendication 2, **caractérisé en ce qu'**au moins une installation ajustable est un manchon qui est en liaison fonctionnelle avec le dispositif selon la revendication 1, de telle sorte que le diamètre puisse être soumis à un rétrécissement contrôlé à au moins un endroit au sein du système tubulaire.

4. Dispositif selon la revendication 2 ou 3, **caractérisé en ce qu'**au moins une installation ajustable est une turbine.

5. Dispositif selon l'une quelconque des revendications précédentes, **caractérisé en ce que** la pression choisie dans un, dans plusieurs ou dans l'ensemble des tubes absorbants peut être créée par définition de la position en hauteur du tube absorbant concerné au-dessus du lit fluidique à appauvrir.

6. Dispositif selon l'une quelconque des revendications précédentes, **caractérisé en ce qu'**un, plusieurs ou l'ensemble des tubes absorbants sont disposés sous le niveau d'eau.

7. Dispositif selon l'une quelconque des revendications précédentes, **caractérisé en ce que** le système tubulaire est revêtu au moins en partie da matière hydrophobe.

8. Procédé d'appauvrissement sélectif de gaz et/ou de mélanges gazeux issus de lits fluidiques de cours d'eau, comprenant les étapes :

a) Réception du fluide à appauvrir,

b) Création de premiers rapports de pression adaptés par élévation contrôlée du fluide, sous lesquels un premier gaz et/ou mélange gazeux est séparé du fluide et passe dans la première phase gazeuse,

c) Transfert du fluide dans un tube absorbant et séparation de la phase gazeuse du reste du fluide, les rapports de pressions dans le tube absorbant étant créés par abordage sélectif de profondeurs choisies,

d) Le cas échéant, transfert des gaz et/ou mélanges gazeux séparés dans un dispositif de réception du gaz,

e) Répétition au moins une fois des étapes b) à d), des rapports de pression chaque fois supplémentaires, auxquels un autre gaz et/ou mélange gazeux est séparé étant créés par abordage sélectif de profondeurs choisies,

f) Recyclage du fluide appauvri.

9. Procédé selon la revendication 8, **caractérisé en ce qu'**on positionne un tube absorbant en profondeur de telle sorte qu'un gaz souhaité s'accumule en proportion substantielle dans le tube absorbant, suite à quoi, on définit la proportion maximale d'un gaz non souhaité dans la phase gazeuse séparée, par le rapport de sa pression de vapeur à la pression réglée dans la phase gazeuse.

10. Procédé selon la revendication 8 ou 9, **caractérisé en ce que** le gaz souhaité est du méthane et le gaz non souhaité est du $CO_2$ et/ou du $H_2S$.

11. Procédé selon l'une quelconque des revendications 8 à 10, **caractérisé en ce qu'**on positionne en profondeur des tubes absorbants à gravité, de telle sorte que le $CH_4$, le $CO_2$ et/ou le $H_2S$ puissent être sélectivement séparés les uns des autres.

12. Procédé selon la revendication 8 ou 9, **caractérisé en ce que** le gaz non souhaité est du $CO_2$ et que le gaz non souhaite est comprimé à une profondeur adaptée du lit fluidique du cours d'eau.

13. Utilisation d'un dispositif selon l'une quelconque des revendications 1 à 7 ou d'un procédé selon l'une quelconque des revendications 8 à 12 pour le nettoyage préventif de cours d'eau.

14. Utilisation d'un dispositif selon l'une quelconque des revendications 1 à 7 ou d'un procédé selon l'une quelconque des revendications 8 à 12 pour collecter des gaz dans des fluides qui sont stockés dans des cours d'eau.

15. Utilisation d'un dispositif selon l'une quelconque des revendications 1 à 7 ou d'un procédé selon l'une quelconque des revendications 8 à 12 pour collecter des gaz dans des fluides dans des lits à des niveaux de pureté définissables.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005088071 A1

**In der Beschreibung aufgeführte Nicht-Patentliteratur**

- **HAWKSWORTH, J.** The World in 2050. Can rapid global growth be reconciled with moving to a low carbon economy?. *PricewaterhouseCoopers LLP,* 01. Juli 2008

- **ZHANG, Y. ; KLING, G.W.** Dynamics of Lake Eruptions and Possible Ocean Eruptions. *Annu. Rev. Earth Planet. Sci.,* 2006, vol. 34, 293-324
- **BERNER, R. A.** Plants, H2S, CO2, O2 and the Permo-Triassic Extinction. *2006 Philadelphia Annual Meeting,* 22. Oktober 2006